# EUROPÄISCHE PATENTSCHRIFT

(11) **EP 1 519 014 B1**
(45) Veröffentlichungstag und Bekanntmachung des Hinweises auf die Patenterteilung: **03.08.2011**
(21) Anmeldenummer: 04014641.7
(22) Anmeldetag: 22.06.2004
(51) Int. Cl.: F01N 3/021, F01N 3/01, B01D 46/24

(54) **Korrosionsschutzauskleidung für Rauchgasfilter und Verfahren zur Sanierung von Rauchgasfiltern**
Corrosion protection liner for a flue gas filter and method for the renovation of flue gas filters
Garnissage de protection contre la corrosion pour filtre de gaz de fumée et procédé de réhabilitation pour filtres de gaz de fumée

(30) Priorität: 25.09.2003 DE 10344691
(43) Veröffentlichungstag der Anmeldung: 30.03.2005
(73) Patentinhaber: GBT - Bücolit GmbH, 45772 Marl (DE)
(72) Erfinder: Konzack, Martin, 40883 Ratingen (DE)
(74) Vertreter: Lenzing Gerber Stute

(56) Entgegenhaltungen:
- EP-A- 1 325 773
- DE-C1- 4 433 202

## Beschreibung

Die vorliegende Erfindung betrifft einen Korrosionsschutz mit den Merkmalen des Oberbegriffs des Anspruchs 1 und ein Verfahren zur Sanierung von Rauchgasfiltern.

Rauchgasfilter werden beispielsweise bei Kraftwerken und in Müllverbrennungsanlagen eingesetzt, um im Rauchgas enthaltene Schadstoffe wie Dioxine, Furane, Schwermetalle und Feststoffe zurückzuhalten. Zu diesem Zweck werden Rauchgasfilter in den Abgaskanal des Kraftwerks eingebaut. Insbesondere sind zwei Bauarten von Rauchgasfiltern bekannt, nämlich die sogenannten Tuchfilter und die Elektrofilter. Diese Filter sind Anlagen mit großen Abmessungen, beispielsweise mit einer Höhe von insgesamt rund 15 Metern und einer Grundfläche von etwa 10x10 Metern. Die Filter werden aus einem Normalstahl gefertigt, der keine besonderen Korrosionseigenschaften aufweist.

Dokument EP 1 325 773 A1 beschreibt ein Rauchgasfilter nach dem Oberbegriff des Anspruchs 1 und Dokument DE 443 3 202 offenbart eine Korrosionsschutzauskleidung für Behälter in einer naß arbeitenden Rauchgasentschwelfelungsanlage.

Zum Korrosionsschutz gegenüber im Rauchgas enthaltenen Säurebildner (SO₃) wird nach dem Stand der Technik der Filter von außen thermisch isoliert und teilweise beheizt. Auf diese Weise soll erreicht werden, dass sich in dem Filter durch die hohe Temperatur des eintretenden Rohgases ein Temperaturniveau einstellt, das im gesamten Filter über dem Säuretaupunkt von Schwefelsäure liegt. Dieser Säuretaupunkt liegt bei den anfallenden Abgasqualitäten im Bereich von 110°C bis 160°C.

In der Praxis zeigt sich jedoch, dass Kältebrücken zwischen dem Stahlmantel des Filters und nach außen geführten Tragkonstruktionen entstehen, die genau im Bereich der Kältebrücken zu einer Taupunktsunterschreitung führen. An diesen Stellen bildet sich Schwefelsäure, die im Bereich dieser Tragkonstruktionen Korrosion an der Filterwandung hervorruft. Andererseits läuft die entstehende Schwefelsäure auch an der Wandung herunter und führt zu Korrosion an dem unteren Austragskegel des Filtergehäuses. In diesem Bereich bildet sich zusammen mit dort anhaftenden Feststoffen eine besonders korrosionsfördernde Anhaftung, die innerhalb kurzer Zeit zu einer Korrosion der Filterwandung führt.

Aufgrund der außen angeordneten Isolation der bekannten Rauchgasfilter, die üblicherweise aus Glaswolle besteht und zum Teil auch Asbest enthält, ist die durch Korrosion entstehende Leckage nicht unmittelbar erkennbar. Es zeigt sich lediglich ein Leckstrom in den mit Unterdruck betriebenen Filter hinein. Eine Sanierung ist dann fällig, wenn der Leckstrom zu groß wird. Die Sanierung umfasst das Entfernen der gesamten äußeren Isolation und nach erfolgter Instandsetzung des Filtermantels das erneute Anbringen einer Isolation. Diese Sanierung ist außerordentlich aufwendig und führt zu Stillstandszeiten.

Es ist deshalb Aufgabe der Erfindung, einen Rauchgasfilter mit einem verbesserten Korrosionsschutz zur Verfügung zu stellen und außerdem ein Verfahren zur Sanierung von bestehenden, durch Korrosion geschädigten Rauchgasfiltern zu schaffen.

Diese Aufgabe wird von einer Korrosionsschutzauskleidung mit den Merkmalen des Anspruchs 1 und von einem Verfahren mit den Merkmalen des Anspruchs 8 gelöst.

Weil die Filterwandung an ihrer Innenseite eine Auskleidung aus einem Schichtenverbund mit wenigsten zwei Schichten eines faserverstärkten Kunststoffs und wenigstens einem zwischen den Schichten angeordneten Hohlraum aufweist, ist die mit Kältebrücken versehene Filterwandung von der dem Rauchgas zugewandten Innenseite beabstandet. Zwischen der Innenseite und der Filterwandung bildet sich ein Temperaturgradient aus, der nicht lokal durch Kältebrücken verringert wird.

Der Schichtenverbund umfasst vorzugsweise ein Abstandsgewebe, das kommerziell verfügbar ist und welches prozesssicher zu verarbeiten ist. Ein bevorzugter Schichtenaufbau sieht vor, dass eine auf die Filterwandung aufgebrachte Außenschicht aus GfK-Laminat vorgesehen ist, die eine darauf aufgebrachte Abstandsschicht aus GfK-Laminat mit Abstandsgewebe und eine auf diese wiederum aufgetragene, dem Rauchgas zugewandte Innenschicht ebenfalls aus GfK-Laminat auf. Die Innenschicht und Außenschicht weisen dabei vorzugsweise eine Dicke von 1,5 mm bis 3 mm auf. Die Abstandsschicht ist bevorzugt 4 mm bis 9 mm dick.

Für einen besonders guten Korrosionsschutz ist vorzugsweise die Auskleidung bis in den Rohgaseinlass hineingeführt. Eine besonders kostengünstige Ausführung ergibt sich, wenn Wandungsabschnitte des Rauchgasfilters, die keinem Temperaturgradienten zur Umgebungstemperatur unterliegen, mit einer einfachen Beschichtung aus GfK-Laminat versehen sind. Solche Wandungsabschnitte sind beispielsweise als Trennwände zwischen zwei unmittelbar aneinander angrenzenden Rauchgasfiltern zu finden. Der erfindungsgemäß vorgesehene Schichtenverbund und die in diesem Ausführungsbeispiel vorgeschlagene einfache Beschichtung sind unterbrechungsfrei aneinander angrenzend zu fertigen. Es wird weiter vorgeschlagen, dass der Hohlraum des Schichtenverbundes nicht durchlüftet ist, so dass bei Leckagen oder Porositäten in dem Schichtenverbund lediglich ein Druckabfall in dem Hohlraum eintritt, nicht aber ein erheblicher Leckstrom durch den Hohlraum entsteht.

Das Verfahren zur Sanierung eines Rauchgasfilters sieht zunächst das Instandsetzen oder Auswechseln der Filterwandung vor. Nach dem Instandsetzen oder Auswechseln der Filterwandung wird erfindungsgemäß eine Innenauskleidung mit einem Schichtenverbund mit wenigstens zwei Schichten eines faserverstärkten Kunststoffs und wenigstens einem zwischen den Schichten angeordneten Hohlraum an der Innenseite der Filterwandung aufgebracht. Der Hohlraum kann in einem weiteren Schritt mit wenigstens einem Anschluss für eine Druckmessvorrichtung versehen sein, der eine Druckänderung in dem Hohlraum detektierbarmacht. Eine Druckänderung würde im Schadensfall eine Leckage der dem Rauchgas zugewandten Schicht des Schichtenverbundes anzeigen, ohne dass diese Leckage zu einem Leckstrom führt. Vorzugsweise wird eine vorhandene außenliegende Isolation der Filterwandung entfernt, so dass diese Wandung von außen zugänglich wird.

Nachfolgend wird die vorliegende Erfindung anhand eines Ausführungsbeispiels beschrieben. Es zeigen:
- Figur 1:: Eine Anordnung aus zwei Rauchgasfiltern in einem Querschnitt von der Seite; sowie
- Figur 2:: Eine Ausschnittsvergrößerung des mit II bezeichneten Bereichs aus Figur 1.

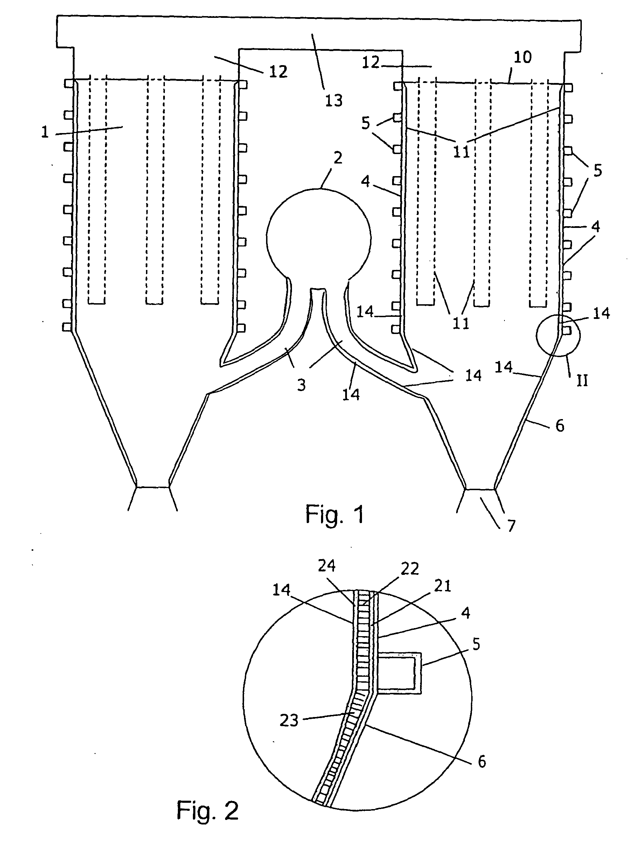

In der Figur 1 ist eine typische Filteranlage für die Reinigung von Rauchgas einer Müllverbrennungsanlage veranschaulicht. Die Anlage umfasst zwei Rauchgasfilter 1 von der Bauart eines Tuchfilters, die mit Rauchgas aus einem Rauchgaskanal 2 über je einen Rauchgaseinlass 3 beaufschlagt werden. Die beider Rauchgasfilter 1 sind im Wesentlichen baugleich, so dass die folgende Beschreibung auf den in Figur 1 rechten Rauchgasfilter beschränkt bleiben soll.

Der Filter 1 weist eine aus Normalstahl gefertigte Wandung 4 auf, die vier senkrechte Außenwände des Filters bildet. Die Wandung 4 ist an der Außenseite mit Versteifungen 5 verstärkt. Diese Versteifungen 5 sind in Horizontalrichtung umlaufend um den Rauchgasfilter 1 ausgeführt. Sie nehmen die von außen einwirkenden atmosphärischen Druckkräfte auf, die durch den im Rauchgasfilter eines befindlichen Unterdruck von etwa 100 Millibar gegenüber dem Atmosphärendruck entstehen. Weiter sind die Versteifungen 5 dazu vorgesehen, den Rauchgasfilter 1 an einer nicht dargestellten äußeren Gebäudestruktur zu verankern.

Unterhalb des senkrechten Teils der Wandung 4 ist ein Austragkonus 6 angeordnet, der nach unten hin in einen Förderer 7 mündet.

In der Ebene der oberen Versteifung 5 ist ein horizontal angeordneter Boden 10 eingesetzt, an dem Filterschläuche 11 hängen. Diese Filterschläuche enthalten beispielsweise Aktivkohle und werden im Betrieb von dem Rauchgas durchsetzt.

Oberhalb des Bodens 10 befinden sich Reingassammelkanäle 12, die zu einem nicht näher dargestellten Reingasauslass 13 führen.

Der mit Rauchgas beaufschlagte der Wandung 4 ist mit einer innenliegenden Beschichtung 14 versehen, die nachfolgend näher beschrieben werden soll. Hierzu ist das Detail II in der Figur 2 vergrößert dargestellt.

Die Figur 2 zeigt einen Ausschnitt der Wandung 4 in dem Übergangsbereich zu dem Austragkonus 6, in dem auch eine Versteifung 5 angeordnet ist. Auf der Innenseite, also der dem Rauchgas zugewandten, in diesem Ausschnitt linken Seite der Wandung 4 ist die Beschichtung 14 angeordnet, die folgenden Schichtenaufbau aufweist:
1. Unmittelbar auf die Wandung 4 ist eine erste Schicht 21 aus GfK-Laminat mit einer Schichtdicke von 2mm aufgetragen. Diese Schicht wird nach Fertigstellung oder nach erfolgter Instandsetzung des Rauchgasfilters 1 dort aufgebracht.
2. Auf die Schicht 21 wird zur Innenseite hin eine Abstandsschicht 22 aufgetragen, die ein Abstandsgewebe aus Glasfasern umfasst. Dieses Abstandsgewebe bildet, wenn es mit Kunstharz verarbeitet wird einen gegenüber den parallel zur Wandung 4 verlaufenden Deckschichten dicht abgeschlossenen Hohlraum 23 aus.
3. Auf das Abstandsgewebe 22 ist wiederum eine Deckschicht 24 aufgetragen, die ebenfalls von einem 2mm dicken GfK-Laminat gebildet ist.
4. Die Innenseite der Schicht 24, die dem Rauchgas zugewandt und in der Figur 2 links angeordnet ist, kann schließlich mit einer Deckschicht versehen werden, die eine besonders glatte Oberfläche gewährleistet.

Im Betrieb tritt heißes Rohgas mit einer Temperatur von ca. 200°C aus dem Rauchgaskanal 2 in die Rauchgaseinlässe 3 ein. Die Rauchgaseinlässe 3 sind bereits mit der Beschichtung 14 versehen, so dass schon hier ein Korrosionsschutz erzielt wird. Im Übergangsbereich zwischen dem Rauchgaseinlass 3 und dem Austragkonus 6 ist die Beschichtung 14 einstückig gasdicht um den Anschlussbereich herum geführt und geht in die Beschichtung des Austragkonus 6 über. Gleiches gilt für den in der Figur 2 veranschaulichten Übergang zwischen dem Austragkonus 6 und der senkrechten Wandung 4 des Rauchgasfilters 1. Das heiße Rauchgas tritt also durch den Rauchgaseinlass 3 in den Austragkonus 6 ein und von dort nach oben zwischen die Filterschläuche 11. Diese sind schlauchförmig ausgeführt und an ihren unteren Stirnseiten verschlossen. Das Rauchgas tritt dann durch die Mantelfläche der Filterschläuche 11 hindurch und nach oben durch den nach Art eines Rohrbodens gestalteten Boden 10 in den Reingassammelkanal 12 und den Reingasauslass 13. Schadstoffe, insbesondere die Staubfracht von beispielsweise 1 Gramm Staub pro Kubikmeter wird in den Filterschläuchen zurück gehalten. Bei einer regelmäßig erforderlichen Reinigung der Filterschläuche 11 fällt der anhaftende Staub nach unten in den Austragkonus 6, wo er von einem Kratzförderer 7 abtransportiert wird.

Die innenliegende Isolation 14 des Rauchgasfilters 1 bewirkt bei den genannten Materialien und Abmessungen etwa einen Temperaturgradienten von 60°C bei einer Rauchgastemperatur von 200°C. Dieser Temperaturgradient ist ausreichend, um sicher zu stellen, dass an der inneren Oberfläche der Beschichtung 14 an keiner Stelle der Säuretaupunkt unterschritten wird. Von außen einwirkende Kältebrücken, wie sie im Bereich der Versteifungen 5 insbesondere durch dort angebrachte, aus Stahl gefertigte Verankerungsvorrichtungen mit einem äußeren Gebäude entstehen können, befinden sich bei diesem Aufbau auf der "kalten" Seite der Beschichtung 14, die nicht mit Rauchgas beaufschlagt wird. Eine Kondensation von Schwefelsäure ist damit praktisch nicht möglich.

Hinzu kommt, dass selbst in ungünstigen Fällen bei Taupunktsunterschreitung die Schwefelsäure auf der Oberfläche 24 der Beschichtung 14 entsteht. Diese Oberfläche ist aber anders als der bislang verwendete Normalstahl der Wandung 4 von sich aus korrosionsresistent. Selbst bei ungünstigen Betriebsparametern ist deshalb keine Korrosion durch das im Rauchgas enthaltene SO₃ zu befürchten.

Kunststoffbeschichtungen, die diese vorteilhaften Korrosionseigenschaften aufweisen, konnten bislang nicht in Rauchgasfiltern der beschriebenen Bauart eingesetzt werden. Diese Kunststoffbeschichtungen behalten ihre Dichtigkeit und ihren festen Kontakt zu der darunter liegenden Stahloberfläche nur bis zu einer Temperatur von etwa 180°C sicher bei. In Rauchgasfiltern entstehen jedoch je nach Betriebszustand schwankende Temperaturen mit Spitzentemperaturen von bis zu 250°C. Diese Temperaturen würden eine einfache Kunststoffbeschichtung, auch aus GfK-Laminat, zerstören. Bei dem beschriebenen Schichtenaufbau kann die äußere Schicht 24 ohne weiteres kurzzeitig mit Temperaturen bis 250°C beaufschlagt werden, da die dadurch eintretende Versprödung des Kunststoffanteils für die Funktion der Beschichtung unschädlich ist. Die mechanische Festigkeit wird hierdurch nicht wesentlich beeinträchtigt. Der Kontakt zum darunter liegenden Stahlblech wird ebenfalls nicht beeinträchtigt, da dieser Bereich (der Übergangsbereich zwischen der Wandung 4 und der ersten Schicht 21 in Figur 2) mit weitaus geringeren Temperaturspitzen beaufschlagt wird.

Ein weiterer Vorteil des erfindungsgemäßen Rauchgasfilters besteht darin, dass die innere Oberfläche im Bereich des Austragskonus 6 im Vergleich zu der herkömmlichen Ausführung in Stahlblech sehr glatt ist. Diese glatte Oberfläche garantiert zusammen mit der fehlenden Kondensation einen sehr effektiven Austrag der von den Filterschläuchen 11 abfallenden Feststoffpartikel. Diese Partikel rutschen an dem Austragkonus 6 zuverlässig auf den Förderer 7 ab. Bei herkömmlichen Anlagen kommt es zu Anhaftungen von Feststoffen im Bereich des Austragkonus, die bei einsetzender Schwefelsäurebildung diese Schwefelsäure regelrecht aufsaugen und damit lokal eine dauerhafte Einwirkung von Schwefelsäure auf die Wandung des Austragskonus verursachen. Deshalb ist besonders der Austragskonus bei Anlagen nach dem Stand der Technik erheblich durch Korrosion gefährdet.

Die Beschichtung der erfindungsgemäßen Rauchgasfilter bildet einen im wesentlichen durchgehenden, hermetisch verschlossenen Hohlraum. Dieser Hohlraum kann mit einem oder mehreren Anschlüssen für Messgeräte versehen sein. Vorzugsweise wird ein Druckmessgerät angeschlossen, das auf Druckänderungen reagiert und damit eine eventuelle Beschädigung des inneren Teils der Beschichtung 24 anzeigt. Bei einer Beschädigung der inneren Schicht 24 geht der Hohlraum 23 unmittelbar auf das Druckniveau, welches innerhalb des Rauchgasfilters 1 herrscht. Diese Druckdifferenz von rund 100 Millibar zum Umgebungsdruck ist sicher und schnell detektierbar. Das Druckmeßgerät zeigt somit jede Beschädigung der inneren Schicht 24 zuverlässig an. Die Beschichtung kann damit in einfacher Weise überwacht werden. Selbst bei einer Undichtigkeit kann der Rauchgasfilter 1 eine Zeitlang weiter betrieben werden. Die Undichtigkeit führt nicht dazu, dass vermehrt Schwefelsäure im Innern des Rauchgasfilters 1 kondensiert. Sie führt ebenso nicht dazu, dass Schwefelsäure die außenliegende Wandung 4 des Rauchgasfilters 1 erreicht, die noch durch die innere Schicht 21 der Beschichtung 14 geschützt ist. Es kann also bei einem Leck in der Schicht 24 beispielsweise bis zu einem turnusmäßigen Wechsel der Filterschläuche 11 abgewartet werden, bis diese Schicht inspiziert und instand gesetzt wird. Leckstellen sind dabei in besonders einfacher Weise, weil diese mit einer Funkenbeaufschlagung getestet werden kann. Mit dieser Funkenbeaufschlagung wird ein Riss oder ein sonstiges Leck zuverlässig lokalisiert. Es kann dann durch eine rein lokale Nachbehandlung instand gesetzt werden.

Vorteilhaft gegenüber dem Stand der Technik ist weiter, dass eine äußere Isolation nicht weiter erforderlich ist. Insbesondere ist auch nicht die im Stand der Technik vorgesehene externe Beheizung der äußeren Oberfläche der Wandung 4 erforderlich. Hierdurch ergibt sich eine erhebliche Verringerung des Material- und Montageaufwandes bei der Erstellung des erfindungsgemäßen Rauchgasfilters 1. Die erwünschte Funktion der Beschichtung 14, die im wesentlichen in der thermischen Isolierung zwischen dem Inneren des Rauchgasfilters 1 und der Wandung 4 besteht, kann bei Wegfall der äußeren Isolation in einfache Weise durch eine Aufnahme der Temperaturverteilung auf der äußeren Wandung beispielsweise mit Wärmebildkameras festgestellt werden. Wenn die Isolation in vorgesehener Weise funktioniert, bilden sich auf der Außenseite des Rauchgasfilters 1 keine Stellen mit übermäßig hoher Temperatur.

Auch wenn die vorliegende Erfindung anhand eines Tuchfilters beschrieben wurde, ist sie nicht auf diese Filterbauart beschränkt. Sie kann beispielsweise auch bei Elektrofiltern zur Anwendung kommen, die ebenfalls aus dem Stand der Technik bekannt sind.

Bei dem vorgeschlagenen Verfahren zur Instandsetzung von Rauchgasfiltern wird ein durch Korrosion geschädigter Rauchgasfilter zunächst im Bereich seiner Wandung 4 instandgesetzt. Hierzu werden die von Korrosion angegriffenen oder zerstörten Abschnitte der Wandung ersetzt. Die außenliegende Isolierung sowie die externe Heizung eines nach dem Stand der Technik gebauten Rauchgasfilters ist dabei ganz oder teilweise zu entfernen. Sobald die Wandung 4, der Austragkonus 6 und gegebenenfalls auch die Rauchgaseinlässe 3 instandgesetzt worden sind, kann eine Beschichtung 14 mit den oben beschriebenen Eigenschaften auf der Innenseite des Rauchgasfilters angebracht werden. Diese Beschichtung weist dann die oben beschriebenen Eigenschaften auf und verhindert zuverlässig die erneute Korrosion der Stahlblechwandung des sanierten Rauchgasfilters. Das Erneuern der außenliegenden Isolation und der Beheizung ist nicht länger erforderlich, so dass die Sanierung mit innenliegender Beschichtung nicht oder unwesentlich aufwendiger ist als die Wiederherstellung des ursprünglichen Zustandes.

Je nach Bauart der Filter und nach Betriebsweise der das zu reinigende Rauchgas erzeugenden Anlage kann die Beschichtung ganz oder auch nur abschnittsweise aufgebracht werden. Auch die Schichtdicke oder der Schichtenaufbau kann in Abhängigkeit von den Betriebsparametern variieren.

## Patentansprüche

1. Rauchgasfilter (1) mit einem Rohgaseinlass (3) und einem Reingasauslass (13), mit einer von Tragvorrichtungen gehaltenen Filterwandung (14), die eine dem Rauchgas zugewandte Innenseite und eine dem Rauchgas abgewandte Außenseite aufweist, sowie mit Filtermitteln und mit wenigstens einem Filterelement, **dadurch gekennzeichnet, dass** die Filterwandung an ihrer Innenseite eine Auskleidung (14) aus einem Schichtenverbund mit wenigstens zwei Schichten (21, 24) eines faserverstärkten Kunststoffs und wenigstens einem zwischen den Schichten angeordneten Hohlraum (23) aufweist.

2. Rauchgasfilter nach Anspruch 1, **dadurch gekennzeichnet, dass** der Schichtenverbund ein Abstandsgewebe (22) umfasst.

3. Rauchgasfilter nach einem der vorhergehenden Ansprüche, **dadurch gekennzeichnet, dass** eine auf die Filterwandung aufgebrachte Außenschicht aus GfK-Laminat, eine darauf aufgebrachte Abstandsschicht aus GfK-Laminat mit einem Abstandsgewebe sowie eine auf diese aufgebrachte, dem Rauchgas zugewandte Innenschicht aus GfK-Laminat umfasst.

4. Rauchgasfilter nach einem der vorhergehenden Ansprüche, **dadurch gekennzeichnet, dass** die Auβenschicht und die Innenschicht eine Dicke von 1,5 mm bis 3 mm aufweisen.

5. Rauchgasfilter nach einem der vorhergehenden Ansprüche, **dadurch gekennzeichnet, dass** die Abstandsschicht eine Dicke von 4 mm bis 9 mm aufweist.

6. Rauchgasfilter nach einem der vorhergehenden Ansprüche, **dadurch gekennzeichnet , dass** die Auskleidung zumindest bereichsweise bis in in den Rohgaseinlass geführt ist.

7. Rauchgasfilter nach einem der vorhergehenden Ansprüche, **dadurch gekennzeichnet, dass** der Hohlraum nicht durchlüftet ist.

8. Verfahren zur Sanierung eines Rauchgasfilters mit folgenden Schritten:
a. Instandsetzen oder Auswechseln der Filterwandung;
b. Aufbringen einer Innenauskleidung mit einem Schichtenverbund mit wenigstens zwei Schichten eines faserverstärkten Kunststoffs und wenigstens einem zwischen den Schichten angeordneten Hohlraum an der Innenseite Filterwandung.

9. Verfahren nach Anspruch 8, **dadurch gekennzeichnet, dass** eine außen liegende Isolation der Filterwandung entfernt wird.

10. Verfahren nach einem der vorhergehenden Ansprüche, **dadurch gekennzeichnet, dass** der Hohlraum mit wenigstens einem Anschluss für eine Druckmessvorrichtung versehen wird, die zur Detektion einer Druckänderung in dem Hohlraum eingerichtet ist.

## Claims

1. Flue gas filter (1) with a crude gas inlet (3) and a clean gas outlet (13), with a filter wall (14) held by supporting devices which has an inner side facing towards the flue gas and an outer side facing away from the flue gas, and with filter means and with at least one filter element, **characterised in that** the filter wall has on its inner side a lining (14) made from a layer composite with at least two layers (21, 24) of a fibre-reinforced plastic and at least one cavity (23) arranged between the layers.

2. Flue gas filter according to Claim 1, **characterised in that** the layer composite comprises a spacer fabric (22).

3. Flue gas filter according to any one of the preceding claims, **characterised in that** it comprises an outer layer of GRP laminate applied to the filter wall, a spacer layer of GRP laminate, with a spacer fabric, applied thereto and an inner layer of GRP laminate, facing towards the flue gas, applied thereto.

4. Flue gas filter according to any one of the preceding claims, **characterised in that** the outer layer and the inner layer have a thickness of 1.5mm to 3mm.

5. Flue gas filter according to any one of the preceding claims, **characterised in that** the spacer layer has a thickness of 4mm to 9mm.

6. Flue gas filter according to any one of the preceding claims, **characterised in that** the lining is guided at least in regions all the way into the crude gas inlet.

7. Flue gas filter according to any one of the preceding claims, **characterised in that** the cavity is not aerated.

8. Method for cleaning a flue gas filter with the following steps:
a. repair or replacement of the filter wall;
b. application of an inner lining with a layer composite with at least two layers of a fibre-reinforced plastic and at least one cavity arranged between the layers on the inner side of the filter wall.

9. Method according to Claim 8, **characterised in that** insulation of the filter wall on the outside is removed.

10. Method according to any one of the preceding claims, **characterised in that** the cavity is provided with at least one connection for a pressure-measuring device, which is configured to detect a change in pressure in the cavity.

## Revendications

1. Filtre pour gaz de fumées (1) comprenant une entrée de gaz brut (3) et une sortie de gaz purifié (13), comprenant une paroi de filtre (4) tenue par des dispositifs porteurs, qui comporte une face intérieure tournée vers les gaz de fumées et une face extérieure détournée des gaz de fumées, et comprenant des moyens de filtration comportant au moins un élément filtrant,
**caractérisé en ce que** la paroi de filtre comporte sur sa face intérieure un habillage (14) composé d'un composite en couches avec au moins deux couches (21, 24) en une matière plastique renforcée de fibres et au moins une cavité (23) agencée entre les couches.

2. Filtre pour gaz de fumées selon la revendication 1,
**caractérisé en ce que** le composite en couches comprend un textile d'écartement (22).

3. Filtre pour gaz de fumées selon l'une des revendications précédentes, **caractérisé en ce qu'**il comprend une couche extérieure, en stratifié de matière plastique renforcée de fibres de verre, appliquée sur la paroi de filtre, une couche d'écartement appliquée sur celle-ci en stratifié de matière plastique renforcée de fibres de verre avec un textile d'écartement, et une couche intérieure, en stratifié en matière plastique renforcée de fibres de verre, appliquée sur la précédente et tournée vers les gaz de fumées.

4. Filtre pour gaz de fumées selon l'une des revendications précédentes, **caractérisé en ce que** la couche extérieure et la couche intérieure présentent une épaisseur de 1,5 mm à 3 mm.

5. Filtre pour gaz de fumées selon l'une des revendications précédentes, **caractérisé en ce que** la couche d'écartement présente une épaisseur de 4 mm à 9 mm.

6. Filtre pour gaz de fumées selon l'une des revendications précédentes, **caractérisé en ce que** l'habillage est mené au moins localement jusque dans l'entrée de gaz brut.

7. Filtre pour gaz de fumées selon l'une des revendications précédentes, **caractérisé en ce que** la cavité n'est pas aérée.

8. Procédé pour rénover à un filtre pour gaz de fumées, comprenant les étapes suivantes :
a) mise en état ou échange de la paroi de filtre ;
b) application d'un habillage intérieur avec un composite en couches comprenant au moins deux couches d'une matière plastique renforcée de fibres, et au moins une cavité, agencée entre les couches, au niveau de la face intérieure de la paroi de filtre.

9. Procédé selon la revendication 8,
**caractérisé en ce qu'**une isolation extérieure de la paroi de filtre est supprimée.

10. Procédé selon l'une des revendications précédentes,
**caractérisé en ce que** la cavité est dotée d'au moins un raccord pour un dispositif de mesure de pression, lequel est conçu pour la détection d'une variation de pression dans la cavité.
